# EUROPEAN PATENT SPECIFICATION

(11) **EP 1 876 195 B1**
(45) Date of publication and mention of the grant of the patent: **01.05.2013**
(21) Application number: 07109986.5
(22) Date of filing: 11.06.2007
(51) Int. Cl.: C08G 18/10, C08G 18/28, C08G 18/48, C08G 18/75, B01F 5/06, B01F 7/00

(54) **Polymerization Process**
Polymerisierungsverfahren
Procédé de polymérisation

(30) Priority: 14.06.2006 US 813929 P
(43) Date of publication of application: 09.01.2008
(73) Proprietor: Rohm and Haas Company, Philadelphia, PA 19106-2399 (US)
(72) Inventor: Archibald, Vere Orland, North Wales, PA 19454 (US); Pierce, David Arthur, Warrington, PA 18976 (US)
(74) Representative: Buckley, Guy Julian

(56) References cited:
- WO-A-02/20144
- DE-A1- 2 823 762

## Description

The present, invention relates to a polymerization process for preparing polymers and in particular, a process for preparing condensation polymers using continuous processes.

Polyesters, polyamides, and polyurethanes are families of step growth or condensation polymers of commercial importance. Efficient manufacturing processes are important to the continued economic viability of these polymers in the marketplace. Continuous processes have often been shown to be advantageous compared to batch processes due to a lower capital investment required per unit output and lower manufacturing cost.

The continuous production of polyurethanes in the melt state, and in the absence of organic solvents, has been the subject of numerous patents. Due to the viscous nature of these high molecular weight (20,000-200,000 M_{w}) polyurethanes and their derivatives, a number of different technologies have been employed in processing them, particularly in reactions with polyurethane pre-polymers. Traditionally, extruders were utilized to knead the reacting components in order to achieve a high degree of mixing. The polymer and solvent are mixed in an extruder for an amount of time to allow the polymer to be dissolved in solution. However, extruders may involve a large capital and energy commitment.

Static and intensive dynamic mixers have been utilized to achieve a high degree of mixing coupled with relatively short residence times. A static mixer bed and a suitable pump pass the material through the static mixer bed. However, static mixers are associated with a very high-pressure drop (> 300 kPa) across the static mixer bed, which requires a large pumping capacity, and intensive mixers can cause adverse side reactions, such as cross linking and high molecular weight build.

The production may also include introducing the capped polymer into a high shear mixer for a time of less than 1 minute to incorporate the polymer into the solvent. However, using a high shear mixer introduces too large of a pressure drop and if the system is not adequately sealed, an explosion could occur.

The present invention, in its various aspects, is as set out in the accompanying claims.

One aspect of the invention includes a process for preparing a polymer, comprising introducing a chain extending compound with a reactive compound into a first mixer; forming a homogenous mixture in the first mixer; transporting the homogenous mixture through at least one of a pipe reactor and a static mixer bed; delivering the homogenous mixture to a second mixer that is a rotating arc mixer; and mixing and reacting the homogenous mixture with a capping agent in the second mixer.

Another aspect of the invention includes a process for preparing a polyurethane, comprising mixing a chain extending compound selected from the group consisting of monofunctional alcohols, polyolys and polyamines and a polyisocyanate in a first mixer to form a homogenous mixture; delivering the homogenous mixture to at least one of a pipe reactor and a static mixer bed; holding the homogenous mixture in the at least one of a pipe reactor and a static mixer bed for no more than 45 minutes; transporting the homogeneous mixture to a second mixer that is a rotating arc mixer; and mixing and reacting the homogeneous mixture with a capping agent in the second mixer.

Reactive compounds are difunctional or polyfunctional isocyanate and preferably, include aliphatic or aromatic diisocyanates. Polyfunctional materials, which are materials having three or more functional moieties, can be used to introduce chain branching. The reactive compounds preferably comprise the general formula OCN-R-NCO, where R is a difunctional organic radical. Chain extending compounds are polyols with a Mw < 15000 and include difunctional alcohol, diamine and dithiol.

Condensation polymers, and specifically, polyurethanes, may be made via a one stage reaction of the reactive compound, such as a polyisocyanate, with the chain extending compound, such as a polyol. Polyisocyanates used in the preparation of polyurethanes may be aliphatic, cycloaliphatic, aromatic or heterocyclic organic di-and poly-isocyanates having at least two isocyanate groups per molecule and also mixtures thereof. Examples include aliphatic di- or tri-isocyanates such as butane 1,4-di-isocyanate, pentane 1,5-di-isocyanate, hexane 1,6-di-isocyanate, and 4-isocyanatomethyloctane 1,8-di-isocyanate; cycloaliphatic poly-isocyanates such as 4,4'-methylenebis, 3,5,5-trimethyl-1- isocyanato-3-isocyanatomethylcyclohexane and ω, ω'-diisocyanato-1,3-dimethylcyclohexane; and aromatic poly-isocyanates such as naphthalene 1,5-diisocyanate, 4,4'-, 2, 4'- and 2,2'-diisocyanatodiphenylmethane or crude MDI, di-isocyanatomethylbenzene.

Suitable polyols are polyhydroxy compounds that are known from polyurethane chemistry and have an OH functionality >1.5 OH per molecule. Examples include diols (such as 1,2-ethanediol, 1,3- and 1,2- propanediol, and 1,4-butanediol), triols (such as glycerol and trimethylolpropane) and tetraols (such as pentaerythritol), polyether polyols, polyester polyols, polycarbonate polyols and polythioether polyols. Preferred polyhydroxy compounds are polyether polyols.

Alcohols (primary, secondary, or tertiary) of various chain lengths (referred to as "capping alcohols") may be used as capping agents, and include butanol, methanol, hexanol, octanol, isooctanol, nonyl alcohol, dodecyl alcohol, stearyl, alcohol, ethylene glycol monoalkyl ethers, such as ethylene glycol monomethyl ether, isopropyl alcohol, isobutyl alcohol, and tert.-pentyl alcohol, may be used to regulate the molecular weight of the polymer. Preference is given to primary alcohols such as, for example, hexanol, octanol, and stearyl alcohol. Primary and secondary amines, such as, for example, butylamine, hexylamine, stearylamine, dibutylamine and ethylene diamine, are also suitable. These various alcohols and amines will have different reactivities as a result of the stearic accessibility of the alcohol or amine moiety.

The capping agent may be present in the reaction mixture from the beginning of the reaction or, depending on the relative reaction kinetics, it may be added at some later time after some or essentially all polymer growth has occurred.

The reaction may be performed in the presence or absence of a catalyst. If it is desired to add catalysts for accelerating the INCO/OH reaction, suitable catalysts are aminic compounds, carboxylic acids or organometallic compounds. Examples of amine compounds that may be used as a catalyst are: triethylamine, tributylamine, dimethylbenzylamine, dicyclohexylmethylamine, dimethylcyclohexylamine, N,N,N',N'- tetramethyldiaminodiethyl ether, bis(dimethylaminopropyl)urea, N-methyl-and N- ethylmorpholine, N,N'-dimporpholinodiethyl ether ("DMDEE"), N-cyclohexylmorpholine, N,N,N',N'-tetramethylethylenediamine, N,N,N',N'-tetramethylbutanediamine, N,N, N',N'-tetramethylhexane-1,6-diamine, pentamethyldiethylenetriamine, dimethylpiperazine, N-dimethylaminoethylpiperidine, 1,2-dimethylimidazole, N-hydroxypropylimidazole, 1-azabicyclo[2.2.0]octane, and 1,4-diazabicyclo[2.2.2] octane ("DABCO"). Amine compounds also include alkanolamine compounds, such as triethanolamine, triisopropanolamine, N-methyl-and N-ethyldiethanolamine, dimethylaminoethanol, 2(N,N-dimethylaminoethoxy)ethanol, N,N',N-tri(dialkylaminoalkyl) hexahydrotriazines, such as N,N',N-tris(dimethylaminopropyl)-s-hexahydrotriazine, iron(II) chloride zinc chloride, lead octoate and tin salts, such as tin dioctoate, tin diethylhexoate, dibuthyltin dilaurate and dibutyldilauryltin mercaptide, 2,3-dimethyl-3,4,5,6-tetrahydropyrimidine, tetraalkylammonium hydroxides, such as tetramethylammonium hydroxide, alkali metal hydroxides, such as sodium hydroxide, alkali metal alkoxides, such as sodium methoxide and potassium isopropoxide, and/or alkali metal salts of long- chain fatty acids having 10 to 20 carbon atoms and, optionally, pendant OH groups. Further compounds which have been found suitable for use as catalysts include Ti compounds, such as Ti(IV)-O-alkyl compounds with alkyl groups, such as methyl, ethyl, n-propyl, isopropyl, n-butyl, isobutyl, tert-butyl, n- pentyl, 2-pentyl, 3-pentyl, ethyl, n-propyl, isopropyl, n-butyl, isobutyl, tert-butyl and Ti(IV) butoxide. Suitable organometallic compounds of tin, lead, iron, titanium, bismuth or zirconium may be used as catalyst, and include tetraisopropyl titanate, lead phenylethyldithiocarbamate, tin(II) salts of carboxylic acids, such as tin(II) acetate, ethylhexoate and diethylhexoate, for example. A further class of compound is represented by the dialkyltin(TV) carboxylates. Additionally, tin oxides, tin sulphides and tin thiolates may be used. Specific compounds include the following: bis(tributyltin)oxide, bis(trioctyltin)oxide, dibutyltin and dioctyltin bis(2- ethylhexyl thiolate), dibutyltin and dioctyltin didodecylthiolate, bis(β- methoxycarbonylethyl)tin didodecylthiolate, bis(β-acetylethyl)tin bis(2- ethylhexylthiolate), dibutyltin and dioctyltin didodecylthiolate, butyltin and octyltin tris(thioglycolic acid-2-ethylhexoate), dibutyl- and dioctyltin- bis(thioglycolic acid 2-ethylhexoate), tributyl-and trioctyltin(thioglycolic acid 2-ethylhexoate), butyltin and octyltin tris(thioethylene glycol 2- ethylhexoate), dibutyltin and dioctyltin bis(thioethylene glycol-2-ethylhexoate), tributyltin and trioctyltin (thioethylene glycol 2-ethylhexoate) with the general formula Rₙ₊₁Sn(SCH₂CH₂OCOC₈ H₁₇)₃₋ₙ, where R is an alkyl group having 4 to 8 carbon atoms, bis(β-methoxycarbonylethyl)tin bis(thioethylene glycol 2-ethylhexoate), bis(β-methoxycarbonylethyl)tin bis(thioglycolic acid 2-ethylhexoate), bis(β-acetylethyl)tin bis(thioethylene glycol 2-ethylhexoate) and bis(β-acetylethyl)tin bis(thioglycolic acid 2-ethylhexoate). Organobismuth compounds used are, in particular, bismuth carboxylates carboxylic acids possessing 2 to 20 carbon atoms, and preferably 4 to 14 atoms. The carboxylic acids have 2, preferably at least 10, and most preferably 14 to 32 carbon atoms. Dicarboxylic acids can also be used. Specific acids that may be mentioned include the following: adipic acid, maleic acid, fumaric acid, malonic acid, succinic acid, pimelic acid, terephthalic acid, phenylacetic acid, benzoic acid, acetic acid, propionic acid, 2- ethylhexanoic, caprylic, capric, lauric, myristic, palmitic and stearic acid. Acids also include the following: butyric acid, caproic acid, caprylic acid, capric acid, lauric acid, myristic acid, palmitic acid, stearic acid, arachidic acid, isobutyric acid and 2- ethylhexanoic acid. It is also possible to use mixtures of bismuth carboxylates with other metal carboxylates, such as tin carboxylates.

If catalysts are used, their amount, relative to the total amount of the chain extending compound, is 0.01% to 10% by weight, preferably 0.05% to 2% by weight. Preferred catalysts are organometallic catalysts.

In the process of preparing polymers, the reactive compounds and chain extending compounds are mixed together to form a homogenous mixture in the first mixer that provides intense shear with relatively short mixing cycles ("a high shear mixer") with a residence time of less than 1 minute, preferably less than 20 seconds. Suitable high shear mixers include those well-known in the art. Examples of suitable high shear mixers include the Ultra Turrax® UTL 2000 by IKA®, Wilmington, NC; the Ross dual stage inline rotor stator from Charles Ross & Son Company, Hauppauge, NY; and the Lightnin Line Blender by SPX Corporation, Rochester, NY. The NCO:OH molar ratio of the mixture is preferably between 0.5 and 2.

Regulation of the polymer molecular weight and optimization of product performance characteristics may be achieved by controlling the ratio of the reactants or through the addition of capping agents that are monofunctional. Preferably, the process is performed at temperatures ranging from ambient temperature to over 250 °C or higher, with temperatures in the range of 50 °C to 150 °C being preferred. The temperature range of 50 °C to 150 °C often provides a desirable balance of productivity and product yield/purity. Lower temperatures result in lower rates of reaction, whereas higher temperatures may lead to unwanted side reactions and/or product discoloration. The temperature range of 50 °C to 150 °C is preferred because it often provides a desirable balance of productivity and product yield/purity.

The homogenous mixture leaving the first mixer then passes through a first stage, which includes either a pipe without internal mixing elements ("pipe reactor") or a static mixer bed that provides sufficient residence time for the polymer to achieve its desired M_{w}. The desired M_{w} range is 20,000 to 200,000. The residence time is preferably 45 minutes or less, with a more preferred residence time being 20 minutes or less, and a most preferred residence time being 10 minutes or less. In making a polyurethane, the homogenous mixture is a isocyanate terminated pre-polymer. Once the homogenous mixture exits the first stage, it is mixed and reacted with a capping agent in a second mixer. The ratio of the homogenous mixture to the capping agent is greater than 1500:1. The two streams (homogenous mixture and capping agent) may be mixed by entering the two streams into a rotating arc mixer ("RAM"), such as the mixer described in WO0220144A1, where the pressure drop associated with this process is that of the pressure drop through a standard pipe, and therefore has very low pumping requirements; or

The resulting capped polymer may then be solubilized in the aqueous or solvent-aqueous solution by mixing the capped polymer and aqueous solution with a third mixer, such as an in-line mixer, static mixer, and high shear mixer. Other techniques to include surface area, such as pelletization or strand, may be advantageous. Additional steps in the inventive process may include passing the homogenous mixture through an extruder, tubular reactor, continuous stirred tank reactor and/or heat exchanger after the first mixer and a dissolver after the second mixer. The resulting capped polymer may be used as thermoplastic elastomers, adhesives, and as modifiers of viscosity and flow characteristics of polymer systems such as acrylic or other polymer dispersions.

### Test Methods:

The weight average molecular weight ("Mw") was measured by gel permeation chromatography.

The shear rates of the polymers were determined using a cone and plate viscometer known as an ICI viscometer. An ICI viscometer is described in ASTM D4287 and is available from such companies as Research Equipment London, Ltd and Elcometer, Incorporated in Rochester Hills, Michigan.

### Example 1

Sample 1 is made by a sequential melt reaction. 2350 g/hr of dry, molten 85°C polyethylene glycol ("PEG") (8000 M_{w}), 121 g/hr of 4,4'-methylene bis-(isocyanatocyclohexane) and 2.33 g/hr of dibutyltin dilaurate II (used to catalyze the reaction) are fed to the entrance of a RAM mixer (sold by CSIRO Thermal and Fluids Engineering, Australia). The two inch diameter RAM mixer rotates at 25 rpm and the jacket temperature is maintained at 85°C. At a distance of 30.5 cm down the 61 cm length of the tube, 85.2 g/min of Decanol is fed to the RAM mixer. The total reaction residence time is 30 minutes. Upon cooling, the resulting solid polymer has a molecular weight of 37,800 M_{w} and has a melt viscosity at 120°C of 30 Pa.s (30 kcps) under a shear rate from 0.1 to 100 s⁻¹.

### Example 2 (comparative)

Sample 2 is made by a melt reaction in which all the feeds are fed to the entrance of the reactor. 2450 g/hr of dry, molten 85°C PEG (molecular weight 8000), 55.0 g/hr of 1,6-diisocyanatohexane, 22.5 g/hr of hydrolytic trimerization of 1,6-hexamethylene diisocyanate, 42.7 g/hr of decanol and 3.63 g/hr of 28% bismuth (III) octoate (used to catalyze the reaction) are fed to the entrance of a RAM mixer. The two inch diameter RAM mixer rotates at 25 rpm and the jacket temperature is maintained at 85°C. The total reaction residence time is 30 minutes. Upon cooling, the resulting solid polymer has a molecular weight of 86,900 M_{w} and has a melt viscosity at 120°C of 900 Pa.s (900 kcps) at the shear rate of 0.1 s⁻¹, and of 400 Pa.s (400 kcps) at the shear rate of 100 s⁻¹.

## Claims

1. A process for preparing a polymer, comprising:
introducing a chain extending compound with a reactive compound into a first mixer;
forming a homogenous mixture in the first mixer;
transporting the homogenous mixture through at least one of a pipe reactor and a static mixer bed;
delivering the homogenous mixture to a second mixer that is a rotating arc mixer; and
mixing and reacting the homogenous mixture with a capping agent in the second mixer to form a capped polymer.

2. The process of claim 1 wherein the introducing comprises adding, as the reactive compound, at least one of a difunctional isocyanate, polyfunctional isocyanate, ester, amide, and acid and, as the chain extending compound, a polyol.

3. The process of claim 1 wherein the introducing comprises adding a catalyst to the first mixer.

4. The process of claim 1 wherein the forming comprises holding the homogeneous mixture in the first mixer for no more than 20 seconds at a temperature of 50°C to 150°C.

5. The process of claim 1 wherein the transporting comprises:
holding the homogenous mixture in the at least one of the pipe reactor and static mixing bed for no more than 10 minutes.

6. The process of claim 1 wherein the reacting comprises:
polymerizing the homogenous mixture at a temperature of 50°C and 150°C;
adding the capping agent at least one of before and during polymer growth; and
collecting the capped polymer.

7. The process of claim 1 wherein the reacting comprises:
allowing the homogeneous mixture to react in the second mixer for no more than 10 minutes.

8. The process of claim 1 further comprising
solubilizing the capped polymer in an aqueous or solvent-aqueous solution.

9. A process for preparing a polyurethane, comprising:
mixing a chain extending compound selected from the group consisting of monofunctional alcohols, polyols and polyamines and a polyisocyanate in a first mixer to form a homogenous mixture;
delivering the homogenous mixture to at least one of a pipe reactor and a static mixer bed;
holding the homogenous mixture in the at least one of a pipe reactor and a static mixer bed for no more than 45 minutes;
transporting the homogeneous mixture to a second mixer that is a rotating arc mixer; and
mixing and reacting the homogeneous mixture with a capping agent in the second mixer.

10. The process of claim 9 further comprising:
adding a catalyst to the first mixer;
allowing the homogenous mixture to remain in the at least one of the pipe reactor and static mixing bed for no more than 10 minutes; and
performing reactions of the homogenous mixture at a temperature of 50°C to 150°C.

## Patentansprüche

1. Ein Verfahren zur Herstellung eines Polymers, das Folgendes beinhaltet:
Einbringen einer kettenverlängernden Verbindung mit einer reaktiven Verbindung in einen ersten Mischer;
Bilden einer homogenen Mischung in dem ersten Mischer;
Transportieren der homogenen Mischung durch mindestens eines von einem Rohrreaktor und einem statischen Mischbett;
Liefern der homogenen Mischung an einen zweiten Mischer, der ein Rotationsbogenmischer ist; und
Mischen und Umsetzen der homogenen Mischung mit einem Capping-Reagens in dem zweiten Mischer, um ein gecapptes Polymer zu bilden.

2. Verfahren gemäß Anspruch 1, wobei das Einbringen Zugeben, als die reaktive Verbindung, von mindestens einem von einem difunktionellen Isocyanat, polyfunktionellen Isocyanat, Ester, Amid und Säure und, als die kettenverlängernde Verbindung, eines Polyols beinhaltet.

3. Verfahren gemäß Anspruch 1, wobei das Einbringen Zugeben eines Katalysators zu dem ersten Mischer beinhaltet.

4. Verfahren gemäß Anspruch 1, wobei das Bilden Halten der homogenen Mischung in dem ersten Mischer für nicht mehr als 20 Sekunden bei einer Temperatur von 50 °C bis 150 °C beinhaltet.

5. Verfahren gemäß Anspruch 1, wobei das Transportieren Folgendes beinhaltet:
Halten der homogenen Mischung in dem mindestens einem von einem Rohrreaktor und
einem statischem Mischbett für nicht mehr als 10 Minuten.

6. Verfahren gemäß Anspruch 1, wobei das Umsetzen Folgendes beinhaltet:
Polymerisieren der homogenen Mischung bei einer Temperatur von 50 °C und 150 °C;
Zugeben des Capping-Reagens mindestens vor und/oder während Polymerwachstum; und
Gewinnen des gecappten Polymers.

7. Verfahren gemäß Anspruch 1, wobei das Umsetzen Folgendes beinhaltet:
Ermöglichen des Umsetzens der homogenen Mischung in dem zweiten Mischer für nicht mehr als 10 Minuten.

8. Verfahren gemäß Anspruch 1, das ferner Folgendes beinhaltet:
Auflösen des gecappten Polymers in einer wässrigen oder Lösungsmittel-wässrigen Lösung.

9. Ein Verfahren zur Herstellung eines Polyurethans, das Folgendes beinhaltet:
Mischen einer kettenverlängernden Verbindung, ausgewählt aus der Gruppe, bestehend aus monofunktionellen Alkoholen, Polyolen und Polyaminen, und eines Polyisocyanats in einem ersten Mischer, um eine homogene Mischung zu bilden;
Liefern der homogenen Mischung an mindestens eines von einem Rohrreaktor und einem statischen Mischbett;
Halten der homogenen Mischung in dem mindestens einen von einem Rohrreaktor und einem statischen Mischbett für nicht mehr als 45 Minuten;
Transportieren der homogenen Mischung zu einem zweiten Mischer, der ein Rotationsbogenmischer ist; und
Mischen und Umsetzen der homogenen Mischung mit einem Capping-Reagens in dem zweiten Mischer.

10. Verfahren gemäß Anspruch 9, das ferner Folgendes beinhaltet:
Zugeben eines Katalysators zu dem ersten Mischer;
Ermöglichen, dass die homogene Mischung für nicht mehr als 10 Minuten in dem mindestens einem von einem Rohrreaktor und einem statischem Mischbett verbleibt; und
Durchführen von Umsetzungen der homogenen Mischung bei einer Temperatur von 50 °C bis 150 °C.

## Revendications

1. Un procédé pour préparer un polymère, comprenant :
introduire un composé d'allongement de chaîne avec un composé réactif dans un premier mélangeur ;
former un mélange homogène dans le premier mélangeur ;
acheminer le mélange homogène à travers au moins un élément parmi un réacteur en tube et un lit de mélangeur statique ;
charger le mélange homogène dans un deuxième mélangeur qui est un mélangeur à arc rotatif ; et
mélanger et faire réagir le mélange homogène avec un agent de coiffage dans le deuxième mélangeur pour former un polymère coiffé.

2. Le procédé de la revendication 1 dans lequel l'introduction comprend ajouter, comme composé réactif, au moins un élément parmi un isocyanate difonctionnel, un isocyanate polyfonctionnel, un ester, un amide, et un acide et, comme composé d'allongement de chaîne, un polyol.

3. Le procédé de la revendication 1 dans lequel l'introduction comprend ajouter un catalyseur dans le premier mélangeur.

4. Le procédé de la revendication 1 dans lequel la formation comprend maintenir le mélange homogène dans le premier mélangeur pendant pas plus de 20 secondes à une température allant de 50 °C à 150 °C.

5. Le procédé de la revendication 1 dans lequel l'acheminement comprend :
maintenir le mélange homogène dans cet au moins un élément parmi le réacteur en tube et le lit de mélangeage statique pendant pas plus de 10 minutes.

6. Le procédé de la revendication 1 dans lequel la réaction comprend :
polymériser le mélange homogène à une température comprise allant de 50 °C à 150°C;
ajouter l'élément de coiffage au moins soit avant, soit pendant la croissance du polymère ; et
recueillir le polymère coiffé.

7. Le procédé de la revendication 1 dans lequel la réaction comprend :
laisser le mélange homogène entrer en réaction dans le deuxième mélangeur pendant pas plus de 10 minutes.

8. Le procédé de la revendication 1 comprenant en outre
solubiliser le polymère coiffé dans une solution aqueuse ou aqueuse à base de solvant.

9. Un procédé pour préparer un polyuréthane, comprenant :
mélanger un composé d'allongement de chaîne sélectionné dans le groupe consistant en alcools monofonctionnels, polyols et polyamines et un polyisocyanate dans un premier mélangeur pour former un mélange homogène ;
charger le mélange homogène dans au moins un élément parmi un réacteur en tube et un lit de mélangeur statique ;
maintenir le mélange homogène dans cet au moins un élément parmi un réacteur en tube et un lit de mélangeur statique pendant pas plus de 45 minutes ;
acheminer le mélange homogène dans un deuxième mélangeur qui est un mélangeur à arc rotatif ; et
mélanger et faire réagir le mélange homogène avec un agent de coiffage dans le deuxième mélangeur.

10. Le procédé de la revendication 9 comprenant en outre :
ajouter un catalyseur dans le premier mélangeur ;
laisser le mélange homogène rester dans cet au moins un élément parmi le réacteur en tube et le lit de mélangeage statique pendant pas plus de 10 minutes ; et
effectuer des réactions du mélange homogène à une température allant de 50 °C à 150°C.
